# EUROPÄISCHE PATENTSCHRIFT

(11) **EP 1 543 308 B1**
(45) Veröffentlichungstag und Bekanntmachung des Hinweises auf die Patenterteilung: **05.04.2006**
(21) Anmeldenummer: 03753280.1
(22) Anmeldetag: 09.09.2003
(51) Int. Cl.: G01M 1/32

(54) **RAD - AUSGLEICHSSTATION MIT KIPPBARER SPANNVORRICHTUNG**
WHEEL-BALANCING STATION COMPRISING A TILTABLE CLAMPING DEVICE
STATION D'EQUILIBRAGE DE ROUES EQUIPEE D'UN DISPOSITIF DE SERRAGE BASCULANT

(30) Priorität: 27.09.2002 DE 10245519
(43) Veröffentlichungstag der Anmeldung: 22.06.2005
(73) Patentinhaber: Schenck RoTec GmbH, 64293 Darmstadt (DE)
(72) Erfinder: ROGALLA, Martin, 64297 Darmstadt (DE); THELEN, Dieter, 64397 Modautal (DE)
(74) Vertreter: Haar, Lucas Heinz Jörn
(86) Internationale Anmeldenummer: PCT/DE2003/002974
(87) Internationale Veröffentlichungsnummer: WO 2004/031717

(56) Entgegenhaltungen:
- EP-A- 1 111 362
- EP-A- 1 116 944
- DE-C- 19 611 574
- US-A- 4 890 717

## Beschreibung

Die Erfindung betrifft eine Ausgleichsstation zum Positionieren und Halten eines Fahrzeugrades für das Anbringen eines Ausgleichsgewichtes mit einer Spannvorrichtung, die wenigstens zwei einander gegenüberliegende und zum Andrücken an den Radumfang bestimmte Backen aufweist, die um eine gemeinsame Spannachse drehbar gelagert sind, wobei wenigstens ein Backen durch einen Antrieb in Richtung der Spannachse hin und her bewegbar und drehbar ist, und mit einer Fördereinrichtung, durch die das Fahrzeugrad liegend zwischen die Backen der Spannvorrichtung förderbar ist.

Eine Ausgleichsstation der angegebenen Art ist aus der Broschüre B 1026 "Auswuchtmaschine für Autoräder, Typenreihe 400ABBE, 400FBLR, 400RBLR" der Carl Schenck AG bekannt. Die bekannte Ausgleichsstation ist für den Unwuchtausgleich an Fahrzeugrädern in einer industriellen Produktionslinie bestimmt, bei welcher in mehreren hintereinander angeordneten Stationen die Räder vermessen, ihre Unwucht bestimmt und durch manuelles Anbringen von Ausgleichsgewichten ausgeglichen werden. Die bekannte Ausgleichsstation hat eine angetriebene Rollenbahn zum Ein- und Ausfördern des Rades und eine Spannvorrichtung zum Halten des eingeförderten Rades beim Anbringen der Ausgleichsgewichte und zum Wenden des Rades für das Anbringen von Ausgleichsgewichten in der zweiten Ausgleichsebene auf der anderen Radseite. Zum Eindrehen des Rades in die Ausgleichsposition ist hierbei eine zweite Station erforderlich. Außerdem wird das Fahrzeugrad für das Anbringen der Ausgleichsgewichte jeweils nur in einer horizontal liegenden Position gehalten, so daß bei ungünstiger Lage der Ausgleichsstelle das manuelle Anbringen des Ausgleichsgewichtes schwierig und ergonomisch ungünstig ist.

Bei einer aus DE 196 11 574 C1 bekannten Vorrichtung zum industriellen Auswuchten von Kraftfahrzeugrädern werden die Unwuchten in zwei Ebenen gemessen und die Ausgleichsstellen auf dem Fahrzeugrad markiert. Anschließend wird das Fahrzeugrad mittels Förderrollen in eine Radmulde transportiert, in der es in einer vertikalen Position gehalten wird. In dieser Position können Schlaggewichte an dem Fahrzeugrad angebracht werden. Zum Anbringen eines Klebegewichtes in der Felgenschüssel des Fahrzeugrades wird die Halterung der Radmulde durch einen maschinellen Antrieb um eine horizontale Achse um 90° geschwenkt, wodurch das Rad in die horizontale Lage mit nach oben weisender Radinnenfläche gebracht wird.

Aus EP 1 116 944 A2 ist eine Ausgleichsstation mit einer Halterung bekannt, in der das Fahrzeugrad zum Befestigen eines Ausgleichsgewichtes in die jeweils geeignete Position gedreht werden kann. In einer ersten Stellung der Halterung befindet sich das Fahrzeugrad in einer vertikalen Lage zum Anschlagen von durch Klammern gehaltene Ausgleichsgewichte. Aus der ersten Stellung kann die Halterung in eine zweite Stellung bewegt werden. Hierbei wird die Halterung in zwei Richtungen derart gedreht, daß das Fahrzeugrad in der zweiten Stellung eine mit der Radinnenseite der Bedienungsperson zugekehrte und von ihr weg nach hinten gekippte Lage einnimmt, die zum Ankleben eines Ausgleichsgewichtes besonders günstig ist. Diese bekannte Vorrichtung eignet sich weniger zum automatischen Ein- und Ausfördern des Rades und benötigt viel Bewegungsraum.

Der Erfindung liegt die Aufgabe zugrunde, eine zum Einsatz in einer Unwuchtausgleichslinie geeignete Ausgleichsstation der eingangs genannten Art zu schaffen, die das Anbringen der verschiedenen Arten von Ausgleichsgewichten, wie einteiligen Schlaggewichten, zweiteiligen Klammergewichten und Klebegewichten, auf ergonomisch günstige Weise ermöglicht und sich durch geringen Platzbedarf auszeichnet.

Die Aufgabe wird erfindungsgemäß dadurch gelöst, daß die Spannvorrichtung aus einer Grundstellung, in der die Spannachse der Backen im wesentlichen horizontal ausgerichtet ist, in eine Kippstellung bewegbar ist, in der die Spannachse in einem Winkel von wenigstens 30° zur Horizontalen geneigt ist.

Durch die erfindungsgemäße Gestaltung der Ausgleichsstation wird auf einfache Weise ein zusätzlicher Freiheitsgrad für die Positionierung des Fahrzeugrades geschaffen. Hierdurch ist es möglich, das Fahrzeugrad für den Ausgleich jeweils in eine für die Anbringung eines Ausgleichsgewichtes gleich welcher Art ergonomisch günstige Lage zu bringen und in dieser Lage zu halten.

Nach einem weiteren Vorschlag der Erfindung weist die Spannvorrichtung einen Rahmen mit zwei sich beiderseits der Fördereinrichtung in Förderrichtung erstreckenden Schenkeln auf, an welchen jeweils ein Backen angebracht ist, wobei der Rahmen um eine quer zur Spannachse verlaufende Schwenkachse in die Kippstellung schwenkbar ist. Die Schwenkachse befindet sich vorzugsweise auf der der Bedienungsperson zugekehrten Seite der Fördereinrichtung, so daß das in der Spannvorrichtung befindliche Rad beim Kippen angehoben wird. Es sind aber auch Anwendungsfälle denkbar, bei denen es vorteilhaft ist, wenn die Schwenkachse etwa in der Mitte der Fördereinrichtung oder auf der der Bedienungsperson abgekehrten Seite der Fördereinrichtung angeordnet ist.

Eine weitere Ausgestaltung der Erfindung sieht vor, daß zumindest ein sich in Förderrichtung erstreckender Schenkel an dem Rahmen in einer ersten und in einer zweiten Stellung befestigbar ist, wobei der Abstand des Schenkels vom gegenüberliegenden Schenkel in der ersten Stellung größer ist als in der zweiten Stellung. Durch diese Maßnahme kann die Spannweite der Spannvorrichtung auf einfache Weise an große Unterschiede von Raddurchmessern angepaßt werden, ohne daß ein großer und aufwendiger Spannhub der Spannvorrichtung erforderlich ist. Aus Symmetriegründen kann es auch zweckmäßig sein, für die Schenkel beider Backen mehrere Befestigungsstellungen an dem Rahmen vorzusehen.

Um das Fahrzeugrad in der Ausgleichsstation in die geeignete Ausgleichsposition drehen zu können, weist erfindungsgemäß jeder Backen zwei parallele Rollen auf, die eine Anlagefläche für den Radumfang bilden. Die Rollen beider Backen sind ebenfalls zueinander parallel, damit das zwischen den Backen eingespannte Rad beim Drehen seine Position in axialer Richtung nicht ändert. Das Eindrehen des Rades in die Ausgleichsposition kann manuell durchgeführt werden, wobei der Spanndruck der Spannvorrichtung reduziert wird, um den Drehwiderstand zu verringern. Vorzugsweise ist wenigstens eine der Rollen mit einem Drehantrieb gekuppelt, um ein automatisches Eindrehen des Fahrzeugrades in die Ausgleichsposition zu ermöglichen. Der Drehantrieb kann erfindungsgemäß in einer Rolle angeordnet sein. Besonders vorteilhaft als Drehantrieb ist hierbei ein Druckluft-Lamellenmotor mit Reduziergetriebe, weil dieser klein baut, kostengünstig ist und nicht überhitzen kann.

Zur Messung des Drehwinkels des Rades beim Eindrehen ist nach einem weiteren Vorschlag der Erfindung an einer Rolle eine Meßeinrichtung, beispielsweise ein Drehwinkelgeber, angeordnet. Vorzugsweise handelt es sich hierbei um eine nicht angetriebene Rolle. Hierdurch wird vermieden, daß der an der Rolle erfaßte Meßwert durch evtl. Antriebsschlupf verfälscht wird.

Eine weitere vorteilhafte Ausgestaltung der Erfindung sieht vor, daß ein Backen der Spannvorrichtung an einem Ende einer in einem Gehäuse längs beweglich und drehbar gelagerten Welle befestigt ist, daß die Welle mit einem im Gehäuse angeordneten Drehantrieb gekuppelt ist und daß an dem anderen Ende der Welle ein Joch drehbar gelagert ist, welches die Bewegung einer Kolbenstange eines parallel zur Welle an dem Gehäuse gebrachten Hubzylinders auf die Welle überträgt. Diese Gestaltung ermöglicht mit einfachen Mitteln die Erzeugung eines großen Spannhubs, einer ausreichenden Spannkraft und eine Wendung des gespannten Rades.

Um eine parallele Ausrichtung der Rollen beider Backen der Spannvorrichtung in den Endlagen zu gewährleisten, ist die Drehbewegung der Backen in zwei in einem Drehwinkelabstand von 180° befindlichen Endstellungen, in denen die Achsen der Rollen jeweils senkrecht ausgerichtet sind, durch Anschläge begrenzt. Der nicht direkt sondern nur über ein eingespanntes Fahrzeugrad drehend antreibbare Backen kann erfindungsgemäß außerdem in den Endstellungen kraftschlüssig, insbesondere mittels Federrasten, festhaltbar sein, um sicherzustellen, daß die Parallelität der Rollen beider Backen auch nach dem Lösen der Spannvorrichtung oder während der Drehung eines gespannten Rades erhalten bleibt.

Der zum Wenden eines Fahrzeugrades erforderliche Bewegungsraum kann bei geeigneter Lage der Kippachse durch Bewegen der Spannvorrichtung in die Kippstellung geschaffen werden. Allerdings ist hierzu eine relativ steile Kippstellung erforderlich. Damit das Wenden eines Rades auch bei nicht gekippter Spannvorrichtung möglich ist, ist nach einem weiteren Vorschlag der Erfindung die Fördereinrichtung an einem Hubtisch angeordnet und durch Absenken des Hubtisches unter die Förderebene nach unten absenkbar. Ist der Senkhub der Fördereinrichtung begrenzt, kann das Kippen der Spannvorrichtung und das Absenken der Fördereinrichtung so miteinander kombiniert werden, daß der benötigte Bewegungsraum für das Radwenden freigemacht wird. Die Kombination beider Bewegungsvorgänge kann auch vorteilhaft sein, um die für diesen Vorgang benötigte Taktzeit zu verringern.

Die Fördereinrichtung kann erfindungsgemäß zwei oder mehr in einem Abstand voneinander angeordnete Förderbänder oder ähnliche endlose Förderelemente aufweisen. Den Förderbändern oder ähnlichen endlosen Förderelementen können mehrere Transportrollen mit zu den Förderbändern oder Förderelementen parallelen Drehachsen benachbart sein, wobei die Transportrollen an einem Hubschemel gelagert sind, der in eine untere Stellung, in der sich die Transportrollen unterhalb der Förderebene der Fördereinrichtung befinden, und in eine obere Stellung bewegbar ist, in der die Transportrollen die Förderebene der Fördereinrichtung überragen. Die Transportrollen haben die Aufgabe, beim Spannen das Verschieben des Rades in Richtung der Spannachse zu erleichtern. Sie werden hierzu in die obere Stellung gefahren. Die untere Stellung der Transportrollen ist notwendig, um das Ein- und Ausfördern des Rades mit Hilfe der Fördereinrichtung zu ermöglichen.

Der Hubschemel, an dem die Transportrollen gelagert sind, ist erfindungsgemäß an dem Hubtisch der Fördereinrichtung angeordnet, so daß mit dem Absenken des Hubtisches auch der Hubschemel mit den Transportrollen abgesenkt wird.

Nach einem weiteren Vorschlag der Erfindung kann an der Einlauf- und/oder Auslaufkante der Fördereinrichtung eine Übergangsrolle angeordnet sein, damit sich das Rad beim Ein- und gegebenenfalls Ausfördern nicht verdreht.

Die Erfindung wird nachfolgend anhand von Ausführungsbeispielen näher erläutert, die in der Zeichnung dargestellt sind. Es zeigen
- Figur 1: eine perspektivische Ansicht einer Ausführungsform einer erfindungsgemäßen Ausgleichsstation,
- Figur 2: eine Schnittansicht der Ausgleichsstation gemäß Figur 1,
- Figuren 3a und 3b: das Ein- und Ausfördern eines Rades bei der Ausgleichsstation gemäß Figur 1,
- Figuren 4a und 4b: das Spannen und Entspannen eines Rades bei der Ausgleichsstation gemäß Figur 1,
- Figuren 5a und 5 b: das Senken und Heben des Hubtisches bei der Ausgleichsstation gemäß Figur 1,
- Figur 6a und 6b: das Wenden und Zurückwenden eines Rades bei der Ausgleichsstation gemäß Figur 1,
- Figur 7: das Eindrehen eines Rades in die Ausgleichsposition bei der Ausgleichsstation gemäß Figur 1,
- Figuren 8a und 8b: das Hochkippen und Zurückkippen eines Rades bei der Ausgleichsstation gemäß Figur 1.

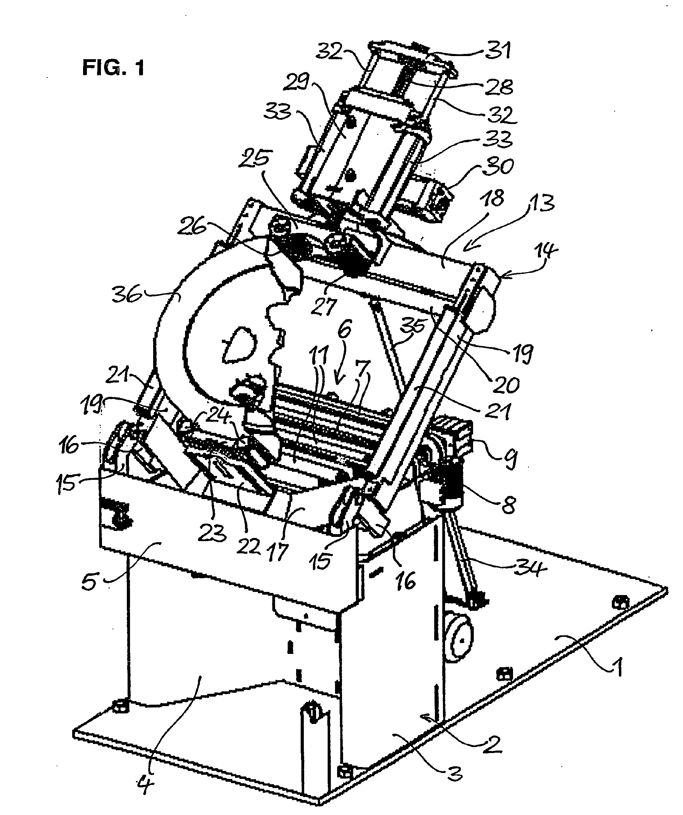

Die in Figur 1 dargestellte Ausgleichsstation ist für den Einsatz in einer mehrere Stationen umfassenden Anlage für das Auswuchten von Automobilrädern bestimmt. Die Ausgleichsstation weist eine Grundplatte 1 und ein darauf angeordnetes Gestell 2 auf. Das Gestell 2 hat zwei parallele Seitenwände 3, an die Nachbarstationen oder Zu- und Ablaufförderer anschließbar sind. An der Vorderseite 4 des Gestells 2 ist eine Blende 5 angebracht.

Das Gestell 2 trägt an seiner Oberseite eine Fördereinrichtung 6 mit einer zur Grundplatte 1 parallelen Förderbahn. Die Fördereinrichtung 6 weist drei im Abstand voneinander angeordnete Förderbänder 7 auf, die über an beiden Seiten des Gestells 2 angeordnete Umlenkrollen geführt sind. Zum Antrieb der Förderbänder 7 ist ein Antriebsmotor 8 mit Winkelgetriebe 9 vorgesehen. Die Fördereinrichtung 6 ist an einem Hubtisch 10 angebracht, der in dem Gestell 2 angeordnet ist. Mit Hilfe des Hubtisches 10 kann die Höhe der Förderbahn an Nachbarstationen angepaßt und die Fördereinrichtung 6 unter das Niveau der Förderbahn abgesenkt oder über das Niveau der Förderbahn angehoben werden. Der Antrieb des Hubtisches 10 kann elektrisch oder pneumatisch ausgeführt sein.

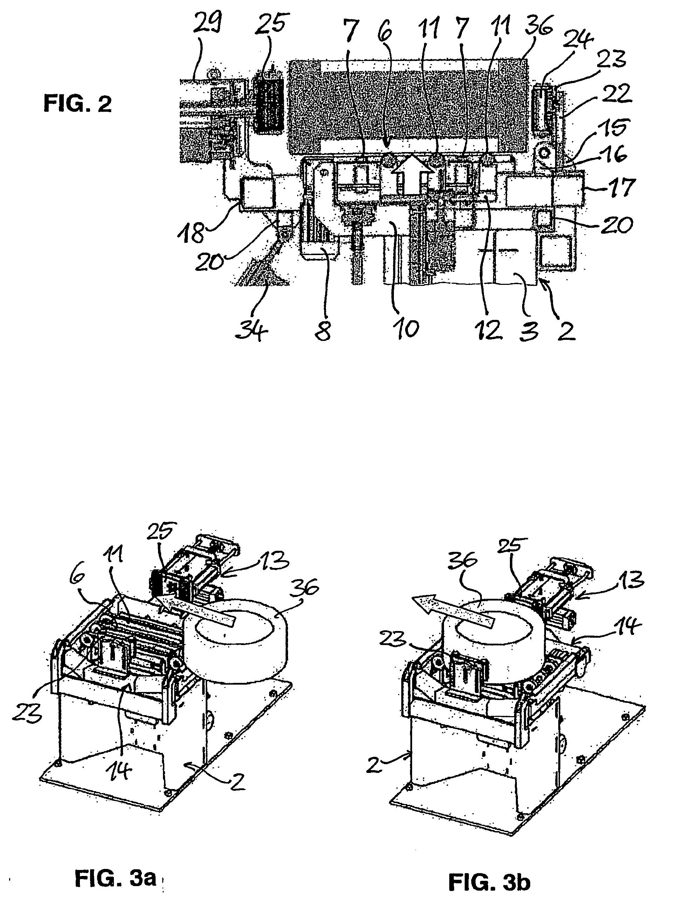

Neben jedem Förderband 7 der Fördereinrichtung 6 befindet sich eine Transportrolle 11 mit einer zur Längsrichtung des Förderbandes 7 parallelen Drehachse. Die Transportrollen 11 sind gemeinsam, wie aus Figur 2 zu ersehen, an einem Hubschemel 12 gelagert. Der Hubschemel 12 ist an dem Hubtisch 10 höhenverstellbar gelagert und abgestützt. Er kann in eine untere Stellung gebracht werden, in der sich die Transportrollen 11 unterhalb der Förderebene der Fördereinrichtung 6 befinden. Die Fördereinrichtung 6 kann daher in dieser Stellung des Hubschemels 12 ein Fahrzeugrad ungehindert ein- und ausfördern. Durch einen Antrieb kann der Hubschemel 12 in eine obere Stellung angehoben werden, in der die Transportrollen 11 die Förderebene der Fördereinrichtung 6 überragen. In dieser Stellung kann auf den Transportrollen 11 ein in der Ausgleichsvorrichtung befindliches Rad quer zur Fördereinrichtung 6 bewegt werden.

An dem Gestell 2 ist eine Spannvorrichtung 13 zum Festspannen eines Fahrzeugrades beim Anbringen der Ausgleichsgewichte angeordnet. Die Spannvorrichtung 13 hat einen die Fördereinrichtung 6 umgebenden Rahmen 14, der schwenkbar an dem Gestell 2 gelagert ist. Das Gestell 2 weist hierzu zwei Lagerböcke 15 auf, die an den vorderen Stirnseiten der Seitenwände 3 befestigt sind. An dem Rahmen 14 sind Laschen 16 angeordnet. Die Laschen 16 sind in den Lagerböcken 15 um eine zur Grundplatte 1 parallele Schwenkachse drehbar gelagert.

Der Rahmen 14 hat eine im wesentliche rechteckige Form und weist einen vorderen Schenkel 17, einen hinteren Schenkel 18 und zwei seitliche Schenkel 19 auf. Die beiden seitlichen Schenkel 19 sind außerdem unterhalb der vorderen und hinteren Schenkel 17, 18 durch Unterzüge 20, 21 miteinander fest verbunden. Der vordere Schenkel 17 und der hintere Schenkel 18 sind durch Schrauben oder auch andere geeignete Befestigungsmittel leicht lösbar mit den seitlichen Schenkeln 19 verbunden und können in größerem oder kleinerem Abstand von der Fördereinrichtung 6 an den seitlichen Schenkeln 19 befestigt werden.

Auf der Oberseite der seitlichen Schenkel 19 ist jeweils eine Übergangsrolle 21 angeordnet, die in der in Figur 2 gezeigten Normalstellung des Rahmens 14 parallel zu den Drehachsen der Fördereinrichtung 6 ausgerichtet ist und die Förderebene der Fördereinrichtung 6 tangiert. Die Übergangsrollen 21 sorgen beim Ein- und Ausfördern eines Rades dafür, daß sich das Rad nicht verdreht.

An dem vorderen Schenkel 17 ist in der Mitte eine hochstehende Platte 22 angebracht, an der höhenverstellbar und drehbar ein Backen 23 gelagert ist. An dem Backen 23 befinden sich zwei parallele und in einem Abstand voneinander angeordnete Rollen 24, die die Anlagefläche für den Umfang der auszugleichenden Fahrzeugräder bilden. Zwischen der Platte 22 und dem Backen 23 ist eine Federrasteinrichtung wirksam, die den Backen 23 jeweils in einer Stellung an der Platte 22 hält, in der die Rollen 24 vertikal ausgerichtet sind. Wird der Backen 23 unter Überwindung der Haltekraft der Federrasteinrichtung gedreht, so wird er bei Erreichen eines Drehwinkels von 180° von der Federrasteinrichtrichtung wieder ergriffen und arretiert.

An dem hinteren Schenkel 18 ist ein dem Backen 23 gegenüberliegender Backen 25 mit zwei parallelen und im Abstand voneinander angeordneten Rollen 26, 27 gehalten. Der Backen 25 ist an dem Ende einer Welle 28 befestigt, die in einem mit dem Schenkel 18 fest verbundenen Gehäuse 29 axial verschiebbar und drehbar gelagert ist. Das Gehäuse 29 ist höhenverstellbar an dem Schenkel 18 angebracht. An dem Gehäuse 29 befindet sich ein Drehantrieb 30, durch den die Welle 28 um wenigstens 180° gedreht werden kann. Durch den Drehantrieb 30 kann der Backen 25 in zwei Stellungen arretiert werden, in denen die Rollen 26, 27 mit den Rollen 24 des in einer Raststellung befindlichen Backens 23 parallel sind. Das Erreichen der beiden Stellungen kann durch induktive Näherungsschalter an der Welle überwacht werden.

Das dem Backen 25 entgegengesetzte Ende der Welle 28 ragt aus dem Gehäuse 29 heraus und ist in einem Joch 31 drehbar gelagert. Die beiden Enden des Jochs 31 sind jeweils mit einer Kolbenstange 32 eines seitlich an dem Gehäuse 29 befestigten pneumatischen Hubzylinders 33 verbunden. Durch Betätigen der beiden Hubzylinder 33 kann das Joch 31 an das Gehäuse 29 herangezogen werden, wodurch die Welle 28 in dem Gehäuse 29 axial verschoben und der Backen 25 in Richtung auf den Backen 23 bewegt wird. Befindet sich zwischen den Backen 23 und 25 ein Fahrzeugrad, so kann dieses auf die beschriebene Weise durch Betätigen der Hubzylinder 33 zwischen den Backen 23, 25 festgespannt werden.

In der Rolle 26 des Backens 25 befindet sich ein Drehantrieb, um durch Antreiben der Rolle 26 ein gespanntes Rad in die Ausgleichsposition eindrehen zu können. Vorzugsweise wird als Drehantrieb ein Druckluftlamellenmotor verwendet, da dieser klein baut und nicht überhitzen kann. Zum Messen des Drehwinkels der Raddrehung ist in der Rolle 27 ein Drehwinkelgeber angeordnet.

Wie in Figur 1 gezeigt, kann der Rahmen 14 der Spannvorrichtung 13 in eine Kippstellung bewegt werden, in der die durch die gemeinsame Drehachse der Backen 23, 25 gebildete Spannachse zur horizontalen Förderebene der Fördereinrichtung 6 geneigt ist. Die Kippbewegung des Rahmens 14 wird mit Hilfe eines Hubzylinders 34 bewirkt, der an der Grundplatte 1 schwenkbar gelagert ist und dessen Kolbenstange 35 gelenkig mit dem hinteren Unterzug 20 des Rahmens 14 verbunden ist. Das beschriebene Ausführungsbeispiel ist so ausgelegt, daß der Rahmen 14 bis zu einer Neigung der Spannachse von 45° gekippt werden kann.

Nachfolgend wird näher erläutert, welche Funktionen mit der beschriebenen Ausgleichsvorrichtung innerhalb einer Produktionslinie zum manuellen Unwuchtausgleich an Fahrzeugrädern erfüllt werden.

Die Figuren 3a und 3b veranschaulichen das Einfördern und Ausfördern eines Rades 36. Hierzu befindet sich die Fördereinrichtung 6 in der vorgesehenen Förderebene. Der Hubtisch mit den Transportrollen 11 ist in die untere Stellung abgesenkt. Die Backen 23, 25 der Spannvorrichtung 13 sind auseinandergefahren und der Rahmen 14 ist in seiner normalen Horizontalstellung.

Vor dem Einfördern wurde die Unwucht des Rades gemessen und das Rad 36 in die Ausgleichsposition für die obenliegende Ausgleichsebene eingedreht. Diese Drehlage wird beim Einfördern beibehalten, so daß das Rad 36 sich nun in der für den Ausgleich der ersten Ebene richtigen Position in der Ausgleichsvorrichtung befindet.

Zum Spannen des eingeförderten Rades 36 werden der Hubschemel 12 und die Transportrollen 11 in die obere Stellung gefahren. Dadurch wird das Rad 36 von der Fördereinrichtung 6 abgehoben. Dies ist in Figur 2 gezeigt. Zusätzlich kann bei Bedarf das Rad 36 noch mit Hilfe des Hubtisches 10 etwas weiter angehoben werden, wenn die Abmessung des Rades dies erfordert.

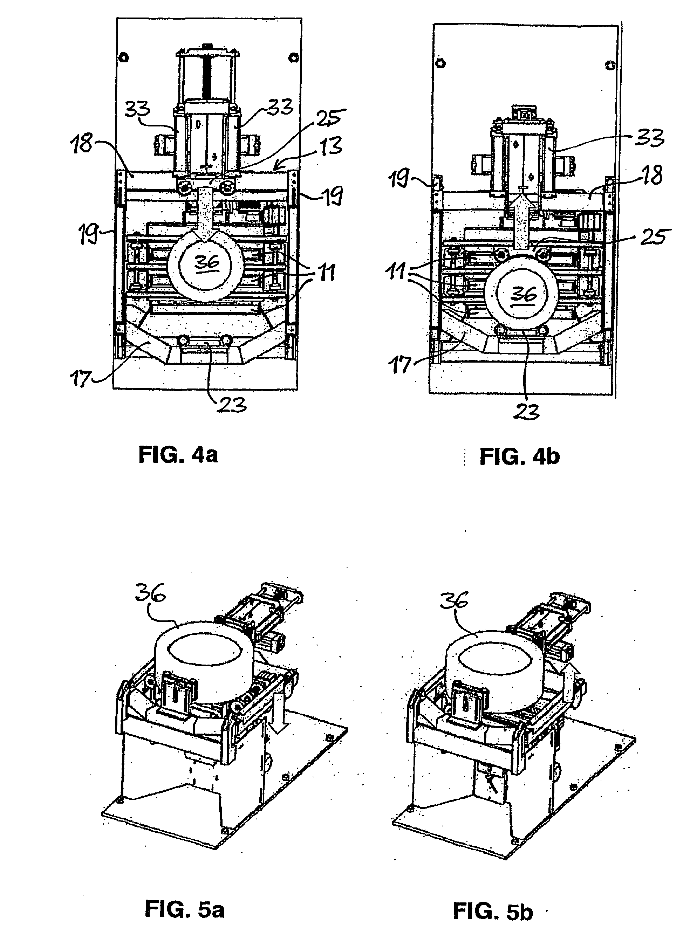

In den Figuren 4a und 4b ist das Spannen und Entspannen eines Rades gezeigt. Bei der Darstellung in Figur 4a befinden sich der vordere Schenkel 17 und der hintere Schenkel 18 jeweils in ihrer zurückgesetzten Befestigungsposition, die für Räder großen Durchmessers benötigt wird. Für das dargestellte kleine Rad 36 reicht in dieser Position der Schenkel 17, 18 der Hub der Spannvorrichtung 13 jedoch nicht aus, um die Spannstellung zu erreichen. Beide Schenkel 17, 18 wurden daher zunächst an den seitlichen Schenkeln 19 gelöst und in einer zur Mitte vorgesetzten Position an diesen wieder befestigt. Den umgerüsteten Zustand zeigt Figur 4b. Nach dem Umrüsten wird durch Beaufschlagung der Hubzylinder 33 der Backen 25 ausgefahren und durch diesen das Rad 36 an den Backen 23 angedrückt, wobei es auf den Transportrollen 11 abrollt und dadurch seine eingedrehte Position beibehält. Der Spanndruck kann über den in die Hubzylinder 22 eingesteuerten Druck geregelt werden.

Ist das Rad gespannt, so kann die Anbringung des Ausgleichsgewichtes in der ersten Ebene erfolgen.

Zum Ausgleich der Unwucht in der zweiten Ebene muß das Rad 36 gewendet werden, damit diese Ebene zugänglich wird. Der zum Wenden erforderliche Bewegungsraum wird dadurch geschaffen, daß der Hubtisch 10 mit der daran angeordneten Fördereinrichtung 6 abgesenkt wird, siehe Figuren 5a und 5b.

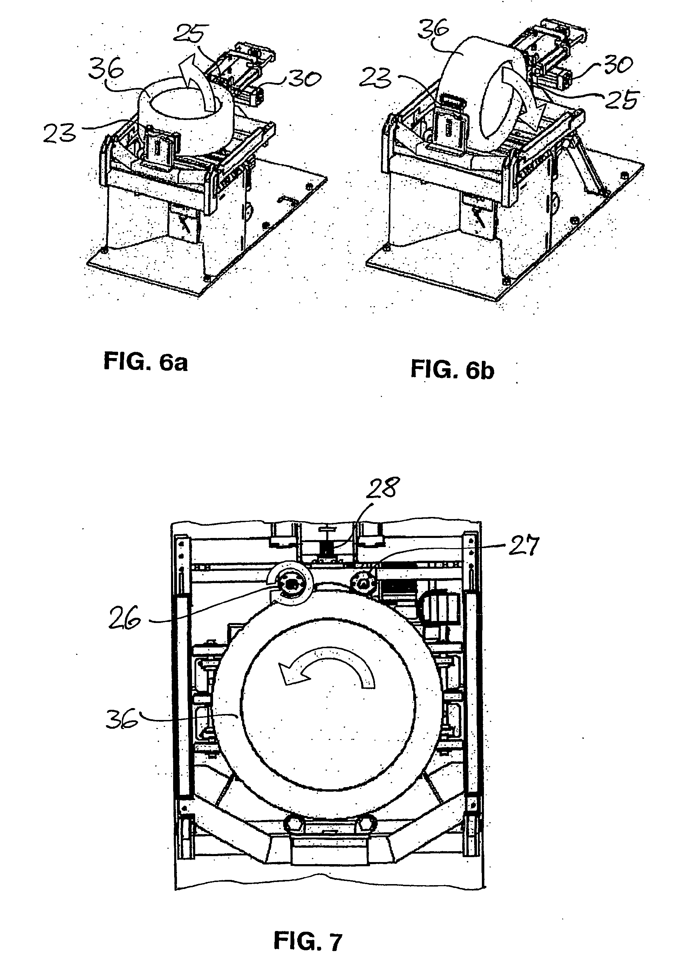

Anschließend wird durch Ansteuern des Drehantriebs 30 der Backen 25 um 180° gedreht und dadurch das Rad 36 gewendet, siehe Figur 6a. Das Erreichen der Endlage des Backens 25 wird durch induktiven Näherungsschalter an der Welle 28 überwacht. Nach dem Wenden oder bereits während des Wendens wird das Rad 36 durch Ansteuern des Antriebs der Rolle 26 in die Ausgleichsposition für die zweite Ausgleichsebene eingedreht. Die Einhaltung des vorgegebenen Drehwinkels wird durch Messung der Raddrehung mit Hilfe der Rolle 27 überwacht. Figur 7 veranschaulicht diesen Vorgang.

Ist ein automatisches Eindrehen des Rades nicht vorgesehen, so kann das Rad auch manuell eingedreht werden. Um hierfür den Drehwiderstand zu senken, kann der Spanndruck der Spannvorrichtung auf ein einstellbares, niedrigeres Niveau umgeschaltet werden.

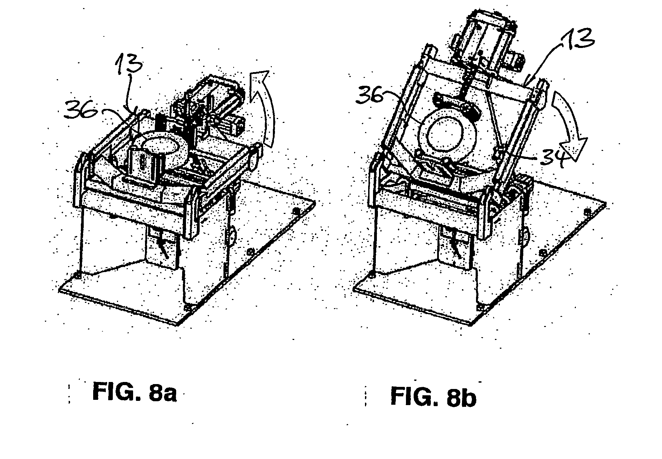

Nach dem Eindrehen erfolgt die Anbringung des Ausgleichsgewichtes in der zweiten Ebene. Handelt es sich hierbei z.B. um ein Klebegewicht, das in der Radschüssel anzubringen ist, so kann zunächst die Spannvorrichtung 13 in die Kippstellung gefahren werden, um das Rad 36, beispielsweise auf einen Winkel von ca. 40°, anzustellen und dadurch günstige ergonomische Bedingungen für das Anbringen des Gewichtes zu schaffen. Hochkippen und Zurückkippen des Rades ist in den Figuren 8a und 8b gezeigt.

Nach dem Anbringen des Ausgleichsgewichtes in der zweiten Ebene wird die Spannvorrichtung 13 zurückgekippt und das Rad 36 zurückgewendet. Der Hubtisch 10 mit der Fördereinrichtung 6 wird hochgefahren, siehe Figur 5b, wobei gleichzeitig die Transportrollen 11 abgesenkt werden. Dann wird die Spannvorrichtung 13 gelöst, siehe Figur 4b, und das Rad wird mit Hilfe der Fördereinrichtung 6 ausgefördert.

Wie die Ausführungen zeigen, erfüllt die erfindungsgemäße Ausgleichsstation alle erforderlichen Funktionen zur Durchführung der üblichen Ausgleichsverfahren. Das Anbringen der Ausgleichsgewichte kann dabei in besonders ergonomischer Weise erfolgen. Durch die Kombination der einzelnen Funktionen in einer einzigen Vorrichtung wird der Bauaufwand vorteilhaft klein gehalten. Die Ausgleichsstation kann auf einfache Weise an viele Radgrößen angepaßt werden und ermöglicht dadurch anstelle von aufwendigen Sonderlösungen rationelles Fertigen von Kleinserien. Ein weiterer Vorteil liegt in den kompakten Außenabmaßen der Ausgleichsstation, wodurch ein Nachrüsten von bestehenden Produktionsanlagen ohne Schwierigkeiten möglich ist.

## Patentansprüche

1. Ausgleichstation zum Positionieren und Halten eines Fahrzeugrades für das Anbringen eines Ausgleichsgewichtes mit einer Spannvorrichtung, die wenigstens zwei einander gegenüberliegende und zum Andrücken an den Radumfang bestimmte Backen aufweist, die um eine gemeinsame Spannachse drehbar gelagert sind, wobei wenigstens ein Backen durch einen Antrieb in Richtung der Spannachse hin und her bewegbar und drehbar ist, und mit einer Fördereinrichtung, durch die das Fahrzeugrad liegend zwischen die Backen der Spannvorrichtung förderbar ist, **dadurch gekennzeichnet, daß** die Spannvorrichtung (13) aus einer Grundstellung, in der die Spannachse der Backen (23, 25) im wesentlichen horizontal ausgerichtet ist, in eine Kippstellung bewegbar ist, in der die Spannachse in einem Winkel von wenigstens 30° zur Horizontalen geneigt ist.

2. Ausgleichsstation nach Anspruch 1, **dadurch gekennzeichnet, daß** die Spannvorrichtung (13) einen Rahmen (14) mit zwei sich beiderseits der Fördereinrichtung (6) in Förderrichtung erstreckenden Schenkeln (17, 18) aufweist, an welchen jeweils ein Backen (23, 25) angebracht ist, und daß der Rahmen (14) um eine quer zur Spannachse verlaufende Schwenkachse in die Kippstellung schwenkbar ist.

3. Ausgleichsstation nach Anspruch 2, **dadurch gekennzeichnet, daß** zumindest ein sich in Förderrichtung erstreckender Schenkel (17) an dem Rahmen (14) in einer ersten und einer zweiten Stellung befestigbar ist, wobei der Abstand des Schenkels (17) vom gegenüberliegenden Schenkel (18) in der ersten Stellung größer ist als in der zweiten Stellung.

4. Ausgleichsstation nach einem der vorhergehenden Ansprüche, **dadurch gekennzeichnet, daß** die Backen (23, 25) jeweils zwei parallele Rollen (26) aufweisen, welche eine Anlagefläche für den Radumfang bilden.

5. Ausgleichsstation nach Anspruch 4, **dadurch gekennzeichnet, daß** wenigstens eine der Rollen (26) mit einem Drehantrieb zum Eindrehen des Fahrzeugrades (36) in die Ausgleichsposition gekuppelt ist.

6. Ausgleichsstation nach Anspruch 5, **dadurch gekennzeichnet, daß** der Drehantrieb in der Rolle (26) angeordnet ist.

7. Ausgleichsstation nach einem der Ansprüche 5 oder 6, **dadurch gekennzeichnet, daß** als Drehantrieb ein Druckluftlamellenmotor mit Reduziergetriebe vorgesehen ist.

8. Ausgleichsstation nach einem der Ansprüche 4 bis 7, **dadurch gekennzeichnet, daß** an einer Rolle (27) eine Meßeinrichtung zur Messung des Drehwinkels der Rolle (27) angeordnet ist.

9. Ausgleichsstation nach Anspruch 8, **dadurch gekennzeichnet, daß** die Rolle (27) frei drehbar ist.

10. Ausgleichsstation nach einem der vorhergehenden Ansprüche, **dadurch gekennzeichnet, daß** ein erster Backen (25) an einem Ende einer in einem Gehäuse (29) längs beweglich und drehbar gelagerten Welle (28) befestigt ist, daß die Welle (29) mit einem im Gehäuse (29) angeordneten Drehantrieb (30) gekuppelt ist und daß an dem anderen Ende der Welle (28) ein Joch (31) drehbar gelagert ist, das die Bewegung der Kolbenstange (32) eines parallel zur Welle (28) an dem Gehäuse gebrachten Hubzylinders (33) auf die Welle (28) überträgt.

11. Ausgleichsstation nach einem der vorhergehenden Ansprüche, **dadurch gekennzeichnet, daß** ein zweiter Backen (23) um 180° in zwei durch Anschläge begrenzte Endstellungen drehbar ist und in den Endstellungen kraftschlüssig, insbesondere mittels Federrasten, an dem Schenkel (17) festhaltbar ist.

12. Ausgleichsstation nach einem der vorhergehenden Ansprüche, **dadurch gekennzeichnet, daß** die Fördereinrichtung (6) an einem Hubtisch (10) angeordnet ist und durch Absenken des Hubtisches (10) unter die Förderebene absenkbar ist.

13. Ausgleichsstation nach einem der vorhergehenden Ansprüche, **dadurch gekennzeichnet, daß** die Fördereinrichtung (6) wenigstens zwei im Abstand voneinander angeordnete Förderbänder (7) oder ähnliche endlose Förderelemente aufweist.

14. Ausgleichsstation nach einem der vorhergehenden Ansprüche, **dadurch gekennzeichnet, daß** der Fördereinrichtung (6) mehrere parallele Transportrollen (11) mit quer zur Spannachse ausgerichteter Drehachse benachbart sind, wobei die Transportrollen (11) an einem Hubschemel (12) gelagert sind, der in einer unteren Stellung, in der sich die Transportrollen (11) unterhalb der Förderebene der Fördereinrichtung (6) befinden und in eine obere Stellung bewegbar ist, in der die Transportrollen (11) die Förderebene der Fördereinrichtung (6) überragen.

15. Ausgleichsstation nach Anspruch 14, **dadurch gekennzeichnet, daß** der Hubschemel (12) an dem Hubtisch (10) gelagert und abgestützt ist.

16. Ausgleichsstation nach einem der vorhergehenden Ansprüche, **dadurch gekennzeichnet, daß** an der Einlauf- und/oder Auslaufkante der Fördereinrichtung eine Übergangsrolle angeordnet ist.

## Claims

1. Balancing station for positioning and holding a vehicle wheel for the attachment of a balance weight with a clamping device which has at least two mutually opposing jaws designed for pressing against the wheel periphery, said jaws being rotatably mounted around a common clamping axis, at least one thereof being rotatable and movable to and fro in the direction of the clamping axis by means of a drive, and with a conveyor device by means of which the vehicle wheel can be conveyed prone between the jaws of the clamping device, **characterised in that** the clamping device (13) can be moved into a tilted position wherein the clamping axis is inclined at an angle of at least 30° from the horizontal out of a basic position wherein the clamping axis of the jaws (23, 25) is aligned substantially horizontally.

2. Balancing station according to claim 1, **characterised in that** the clamping device (13) has a frame (14) with two legs (17, 18) extending in the conveying direction on both sides of the conveyor device (6), to which legs (17, 18) a jaw (23, 25) is attached respectively, and **in that** the frame (14) is pivotable into the tilted position around a swivel axis running transversely to the clamping axis.

3. Balancing station according to claim 2, **characterised in that** at least one leg (17) extending in the conveying direction is fixable to the frame (14) in a first and a second position, the distance between the leg (17) and the opposing leg (18) being greater in the first position than in the second position.

4. Balancing station according to any one of the preceding claims, **characterised in that** the jaws (23, 25) have two parallel rollers (26) respectively which form a contact surface for the wheel periphery.

5. Balancing station according to claim 4, **characterised in that** at least one of the rollers (26) is coupled with a rotary drive for rotational adjustment of the vehicle wheel (36) into the balancing position.

6. Balancing station according to claim 5, **characterised in that** the rotary drive is arranged in the roller (26).

7. Balancing station according to either claim 5 or claim 6, **characterised in that** a rotating piston air engine with a reduction gear is provided as a rotary drive.

8. Balancing station according to any one of claims 4 to 7, **characterised in that** a measuring device for measuring the rotational angle of the roller (27) is arranged at one roller (27).

9. Balancing station according to claim 8, **characterised in that** the roller (27) is freely rotatable.

10. Balancing station according to any one of the preceding claims, **characterised in that** a first jaw (25) is fixed at one end of a shaft (28) which is mounted rotatably and movable longitudinally in a housing (29), **in that** the shaft (29) is coupled to a rotary drive (30) arranged in the housing (29) and **in that** a yoke (31) is mounted rotatably at the other end of the shaft (28) and transmits thereto the movement of the piston rod (32) of a lifting cylinder (33) which is mounted to the housing parallel to the shaft (28).

11. Balancing station according to any one of the preceding claims, **characterised in that** a second jaw (23) is rotatable through an angle of 180° into two end positions limited by stops and can be detained at the leg (17) in said end positions by friction locking, in particular by means of spring catches.

12. Balancing station according to any one of the preceding claims, **characterised in that** the conveyor device (6) is arranged at an elevating table (10) and can be lowered below the conveying plane by lowering the elevating table (10).

13. Balancing station according to any one of the preceding claims, **characterised in that** the conveyor device (6) has at least two conveyor belts (7) or similar continuous conveyor elements arranged at a distance from one another.

14. Balancing station according to any one of the preceding claims, **characterised in that** the conveyor device (6) is adjacent to a plurality of parallel transport rollers (11) with a rotating axis orientated transversely to the clamping axis, said transport rollers (11) being mounted on a lift bolster (12) which is in a lower position wherein the transport rollers (11) are provided below the conveying plane of the conveyor device (6) and is movable into an upper position in which the transport rollers (11) protrude beyond the conveying plane of the conveyor device (6).

15. Balancing station according to claim 14, **characterised in that** the lift bolster (12) is mounted at the elevating table (10) and abuts against it.

16. Balancing station according to any one of the preceding claims, **characterised in that** a fence roller is arranged at the leading and/or trailing edge of the conveyor device.

## Revendications

1. Station d'équilibrage pour positionner et tenir une roue de véhicule en vue d'appliquer un poids d'équilibrage, avec un dispositif de serrage qui présente au moins deux mâchoires situées en vis à vis et destinées à prendre appui sur la circonférence de la roue, et qui sont logées de façon pivotante autour d'un axe de serrage commun, au moins une des mâchoires pouvant être déplacée et pivotée dans les deux sens en direction de l'axe de serrage par un mécanisme d'entraînement, et avec un dispositif de transport par lequel la roue couchée peut être transportée entre les mâchoires du dispositif de serrage, **caractérisée en ce que** le dispositif de serrage (13) peut être déplacé d'une position de base dans laquelle l'axe de serrage des mâchoires (23, 25) est dirigé essentiellement horizontalement, dans une position de basculement dans laquelle l'axe de serrage est incliné par rapport à l'horizontale d'un angle au moins égal à 30°.

2. Station d'équilibrage selon la revendication 1, **caractérisée en ce que** le dispositif de serrage (13) est muni d'un cadre (14) avec deux branches (17, 18) s'étendant des deux côtés du dispositif de transport (6) en direction du déplacement et sur lesquelles sont disposées une mâchoire (23, 25), et **en ce que** le cadre (14) peut être basculé dans la position de basculement autour d'un axe de basculement s'étendant perpendiculairement à l'axe de serrage.

3. Station d'équilibrage selon la revendication 2, **caractérisée en ce qu'**au moins une branche (17) s'étendant en direction du déplacement peut être fixée au cadre (14) dans une première et une deuxième position, la distance entre la branche (17) et la branche opposée (18) étant plus grande dans la première position que dans la deuxième.

4. Station d'équilibrage selon l'une des revendications précédentes, **caractérisée en ce que** les mâchoires (23, 25) sont munies chacune de deux rouleaux (26) parallèles formant une surface d'appui pour la circonférence de la roue.

5. Station d'équilibrage selon la revendication 4, **caractérisée en ce qu'**au moins un des rouleaux (26) est couplé à un entraînement en rotation pour faire tourner la roue du véhicule (36) dans la position d'équilibrage.

6. Station d'équilibrage selon la revendication 5, **caractérisée en ce que** l'entraînement en rotation est disposé dans le rouleau (26).

7. Station d'équilibrage selon l'une des revendications 5 ou 6, **caractérisée en ce qu'**il est prévu comme entraînement en rotation un moteur à lamelles à air comprimé avec un engrenage démultiplicateur.

8. Station d'équilibrage selon l'une des revendications 4 à 7, **caractérisée en ce qu'**un dispositif de mesure est disposé dans un rouleau (27) pour mesurer l'angle de rotation du rouleau (27).

9. Station d'équilibrage selon la revendication 8, **caractérisé en ce que** le rouleau (27) peut tourner librement.

10. Station d'équilibrage selon l'une des revendications précédentes, **caractérisée en ce qu'**une première mâchoire (25) est fixée à une extrémité d'un arbre (28) logé rotatif et pouvant se déplacer longitudinalement dans un boîtier (29), **en ce que** l'arbre (29) est couplé à un entraînement en rotation (30) disposé dans le boîtier (29), et **en ce qu'**une travée (31) est logée rotative à l'autre extrémité de l'arbre (29) et qui transmet à l'arbre (28) le mouvement de la tige de piston (32) d'un cylindre de levée (33) placé sur le boîtier parallèlement à l'arbre (28).

11. Station d'équilibrage selon l'une des revendications précédentes, **caractérisée en ce qu'**une deuxième mâchoire (23) peut être tournée de 180° dans deux positions finales limitées par des butées et peut être maintenue sur la branche (17) dans les positions finales par force, notamment au moyen de crans à ressort.

12. Station d'équilibrage selon l'une des revendications précédentes, **caractérisée en ce que** le dispositif de transport (6) est disposé sur une table de levée (10) et peut être abaissé en dessous du plan de transport en abaissant la table de levée.

13. Station d'équilibrage selon l'une des revendications précédentes, **caractérisée en ce que** le dispositif de transport (6) est muni d'au moins deux bandes de transport (7), ou d'autres éléments de transport sans fin similaires, disposées à distance l'une de l'autre.

14. Station d'équilibrage selon l'une des revendications précédentes, **caractérisée en ce que** plusieurs rouleaux de transport (11) ayant des axes de rotation dirigés perpendiculairement à l'axe de serrage sont disposés au voisinage du dispositif de transport (6), les rouleaux de transport étant logés sur un dispositif de levée (12) qui peut être déplacé dans une position inférieure dans laquelle les rouleaux de transport (11) se situent en dessous du plan de transport du dispositif de transport (6) et dans une position supérieure dans laquelle les rouleaux de transport (11) saillent au-delà du plan de transport du dispositif de transport (6).

15. Station d'équilibrage selon la revendication 14, **caractérisée en ce que** le dispositif de levée (12) est logé et en appui sur la table de levée (10).

16. Station d'équilibrage selon l'une des revendications précédentes, **caractérisée en ce qu'**un rouleau de transition est disposé sur le bord d'entrée et/ou sur le bord de sortie du dispositif de transport.
